# EUROPÄISCHE PATENTSCHRIFT

(11) **EP 2 041 407 B1**
(45) Veröffentlichungstag und Bekanntmachung des Hinweises auf die Patenterteilung: **06.03.2013**
(21) Anmeldenummer: 07725961.2
(22) Anmeldetag: 12.06.2007
(51) Int. Cl.: F01N 13/18, F01N 13/10

(54) **EINRICHTUNG FÜR DEN ANSCHLUSS EINER ROHRLEITUNG AN EINEN ABGASAUSGANG**
DEVICE FOR CONNECTING A PIPE TO AN EXHAUST OUTLET
SYSTÈME DE RACCORDEMENT D'UNE CONDUITE TUBULAIRE À UNE SORTIE DE GAZ D'ÉCHAPPEMENT

(30) Priorität: 19.07.2006 DE 102006033357
(43) Veröffentlichungstag der Anmeldung: 01.04.2009
(73) Patentinhaber: ElringKlinger AG, 72581 Dettingen (DE)
(72) Erfinder: KULLEN, Wilhelm, 72584 Hülben (DE); MATTHEIS, Hansjürgen, 89143 Blaubeuren (DE)
(74) Vertreter: Beck, Jürgen
(86) Internationale Anmeldenummer: PCT/EP2007/005148
(87) Internationale Veröffentlichungsnummer: WO 2008/009334

(56) Entgegenhaltungen:
- DE-A1- 10 001 287
- US-A1- 2002 174 650
- US-B1- 6 789 386

## Beschreibung

Die Erfindung betrifft eine Einrichtung zur Bildung einer abgedichteten Verschraubung für den Anschluss einer Rohrleitung an einen Ausgang für ein die Einrichtung thermisch belastendes Strömungsmedium, insbesondere für den Anschluss eines Abgaskrümmers an einen Abgasausgang eines Verbrennungsmotors, mit in einem Befestigungsflansch der Rohrleitung vorgesehenen Bohrungen für betreffende Gewindebolzen und einer zwischen Flansch und Ausgang befindlichen Dichtungsanordnung, wobei ein Einfassungsteil vorgesehen ist, das den Flansch an seiner dem Ausgang zugewandten Seite unter Freilassung zumindest eines Durchganges für das Medium einfaßt und eine zumindest teilweise Einfassung der von dem Gewindebolzen durchgriffenen weiteren Randbereiche des Flansches bildet, wobei im Einfassungsteil zumindest eine Bohrung einen den ihr zugeordneten Gewindebolzen angepaßten Durchmesser aufweist und die im Flansch befindlichen Bohrungen als Langlöcher ausgebildet sind, die eine Bewegung der Rohrleitung in einer Verschieberichtung quer zu dem Gewindebolzen ermöglichen, wobei sich zu beiden Seiten des dem Ausgang zugewandten Teils des Einfassungsteils ein Dichtelement der Dichtungsanordnung befindet, wobei der Flansch an beiden Längsrändern, die sich entlang der durch die Langlöcher vorgegebenen Verschieberichtung erstrecken, eine Folge von Langlöchern aufweist, und wobei das Einfassungsteil an seiner dem Ausgang zugewandten Seite einen von Längsrand zu Längsrand des Flansches durchgehenden Boden bildet, der mit Durchgängen für das Medium und mit an den Durchmesser der Gewindebolzen angepaßten Bohrungen versehen ist.

Bekanntermaßen können thermische Belastungen, wie sie bei heißen Strömungsmedien, insbesondere bei Abgasen von Verbrennungsmotoren, gegeben sind, bei Leitungsanschlüssen mit festen Verschraubungen zu starken gegenseitigen Verspannungen der Bauteile führen. Unterschiede der Größe der Wärmeausdehnung des Flansches von Abgaskrümmern gegenüber dem kälteren Zylinderkopf eines betreffenden Verbrennungsmotors können beispielsweise im Millimeterbereich liegen. Dies führt zu einer Reihe negativer Auswirkungen wie Deformation des Krümmers, Längung der Gewindebolzen/Stehbolzen, Schädigung des Bolzengewindes, Schädigung des Zylinderkopfs, Lösen des Dichtverbandes mit entsprechenden Abdichtproblemen, Bauteilverschleiß etc.. Die sich derzeit abzeichnende Erhöhung des Temperaturniveaus im Abgasbereich führt zu einer weiteren Verschärfung der diesbezüglichen Probleme.

Um hier Abhilfe zu schaffen, wird derzeit versucht, die gegenseitige Beeinträchtigung der Bauteile durch reduzierte Anziehmomente der Verschraubung zu verringern. Zwar wird in Folge dieser Maßnahme die Deformation des Krümmers reduziert, gleichzeitig ergeben sich jedoch zyklische Längenänderungen des Krümmers in verstärktem Ausmaße. Dies kann wiederum zu einer Schädigung der Gewindebolzen aufgrund des Mitnahmeeffektes am Schraubenkopf oder der Mutter des Gewindebolzens, durch den Reibschluss mit dem Flansch des Krümmers führen. Dadurch kann der Gewindebolzen zyklisch hin und her bewegt werden, es kommt zu Schädigungen des Bolzengewindes, zu einem Lösen des Dichtverbandes und zu Undichtheit.

Eine Einrichtung der eingangs genannten Art zur Bildung einer abgedichteten Verschraubung für den Anschluß einer Rohrleitung an einen Ausgang für ein die Einrichtung thermisch belastendes Strömungsmedium ist aus DE 100 01 287 A1 bekannt geworden. Durch die DE 100 01 287 A1 ist ein Abgaskrümmer zur Anbringung an einen Zylinderkopf einer Brennkraftmaschine bekannt, der mindestens eine mit Abgasbohrungen zum Austritt von Abgas versehene Zylinderbank aufweist. Ein Abgassammelgehäuse dient zur Aufnahme von Abgas aus dem Zylinderkopf, wobei eine zwischen dem Abgassammelgehäuse und dem Zylinderkopf angeordnete Dichtungseinrichtung vorhanden ist. Das Abgassammelgehäuse ist derart mit Ausnehmungen versehen, dass es über Befestigungsmittel, wie beispielsweise Schrauben, direkt mit dem Zylinderkopf verbindbar ist, wobei zwischen dem Abgassammelgehäuse und dem Zylinderkopf durch Wärmeeinwirkung hervorgerufene Bewegungen möglich sind, insbesondere kann sich das Abgassammelgehäuse unter Wärmeeinwirkung gegenüber dem Zylinderkopf ausdehnen und insoweit die entsprechende Kompensationsbewegung ausführen, ohne dass aufwendige Konstruktionen mit Gleitflanschen oder dergleichen vorgesehen werden müssen.

Im Hinblick auf diese Problematik stellt sich die Erfindung die Aufgabe, eine Einrichtung zur Verfügung zu stellen, die einen betriebssicheren Anschluss einer Rohrleitung, insbesondere eines Abgaskrümmers, auch bei Betriebszuständen mit hoher thermischer Belastung und einen einfachen Montagevorgang beim Herstellen der Anschlußverbindung gewährleistet.

Erfindungsgemäß ist diese Aufgabe durch eine Einrichtung gelöst, die die Merkmale des Patentanspruches 1 in seiner Gesamtheit aufweist.

Nach dem kennzeichnenden Teil des Patentanspruches 1 ist das Einfassungsteil einstückig mit vom Boden abgewinkelten Seitenwänden, die sich entlang der Längsränder des Flansches erstrecken, sowie mit Deckteilen gestaltet, die sich im Bereich der Längsränder des Flansches an dessen vom Ausgang abgewandter Oberseite erstrecken. Bei derartiger käfigartiger Gestaltung des Einfassungsteiles gestaltet sich der Montagevorgang beim Herstellen der Anschlussverbindung besonders einfach, weil das den Flansch käfigartig umgebende Einfassungsteil bereits vorausgehend auf den Flansch aufgeschoben werden kann, wo es vorteilhafterweise selbsthaltend in der Einbauposition verbleibt, in der sowohl die Bohrungen im Einfassungsteil als auch die Langlöcher im Flansch von den Gewindebolzen beim Herstellen der Anschlussverbindung durchgriffen werden können.

Hierbei kann die Anordnung so getroffen sein, dass sich die eine Folge von Bohrungen für die Gewindebolzen enthaltenden Deckteile über die gesamte Länge des Einfassungsteiles erstrecken. Bei solchen Ausführungsbeispielen kann es von Vorteil sein, die Deckteile in Bereichen, die zwischen aufeinanderfolgenden Bohrungen gelegen sind, mit Auswölbungen zu versehen, die jeweils einen Zwischenraum zwischen Oberseite des Flansches und Deckteil bilden. Diese Zwischenräume, die die Größe der Berührungsfläche zwischen Flansch und Einfassungsteil verkleinern, verringern die Wärmeübertragung auf das Einfassungsteil.

Alternativ kann die Anordnung so getroffen sein, dass die Deckteile in gesonderte, durch Zwischenräume getrennte Deckabschnitte unterteilt sind, wobei die Bohrungen für die Gewindebolzen in den Deckabschnitten vorgesehen sind. Auch hierbei ist durch die zwischen den Deckabschnitten vorhandenen Zwischenräume die Wärmeübertragung verringert.

Wie bereits erwähnt, kann bei der Erfindung durch Wärmeausdehnung eine Relativbewegung zwischen Flansch und Einfassungsteil erfolgen. Genauer gesagt, werden Schiebezonen zwischen Oberseite des Flansches und den Deckteilen des Einfassungsteiles sowie zwischen dem Boden und der zugewandten Seite des Flansches gebildet, wobei hier die Verschiebung an einer oder beiden Dichtflächen des Dichtelementes der Dichtungsanordnung erfolgt. Im Hinblick hierauf kann es vorteilhaft sein, das zwischen Boden des Einfassungsteiles und zugewandter Fläche des Flansches vorgesehene Dichtelement reibungsreduzierend zu gestalten und/oder mit reibungsreduzierenden Mitteln zu versehen. Des weiteren kann eine Verschiebung auch zwischen den lagenartigen Dichtungsteilen selbst erfolgen.

In entsprechender Weise ist es vorteilhaft, dass zwischen Oberseite des Flansches und den Deckteilen des Einfassungsteiles reibungsreduzierende Gestaltungen und/oder reibungsreduzierende Mittel vorhanden sind.

In den Fällen, wo der Flansch Teil eines Abgaskrümmers ist, der zur Bildung eines gemeinsamen Anschlusses für mehrere in einer Längsrichtung verteilte Abgasausgänge langgestreckte, die Langlöcher enthaltende Längsränder und diese endseits verbindende kürzere Seitenränder aufweist, erstreckt sich das Einfassungsteil vorzugsweise über die gesamte Folge der Langlöcher des Flansches. Bei einer solchen Gestaltung ist es auch möglich, die gesamte Verschraubung, die bei einem Mehrzyl indermotor für den Abgasausgang jedes Zylinders mindestens je ein Gewindebolzenpaar aufweisen kann, mittels eines einzigen Einfassungsteiles gegenüber Verschiebebewegungen des Flansches zu entkoppeln.

Nachstehend ist die Erfindung anhand von in der Zeichnung dargestellten Ausführungsbeispielen im Einzelnen erläutert. Es zeigen:
- Fig. 1 eine in annähernd in natürlichem Maßstab, abgebrochen und teils aufgebrochen gezeichnete Vorderansicht eines mittels einer Verschraubung an einem nicht dargestellten Zylinderkopf eines Verbrennungsmotors angebrachten Abgaskrümmers, wobei in der in der Zeichnung oben liegenden Hälfte der Figur ein erstes Ausführungsbeispiel der erfindungsgemäßen Einrichtung und in der unteren Hälfte der Figur ein zweites Ausführungsbeispiel der erfindungsgemäßen Einrichtung verdeutlicht sind;
- Fig. 2 einen gegenüber Fig. 1 vergrößert gezeichneten Teillängsschnitt entsprechend der Schnittlinie II-II von Fig. 1;
- Fig. 3 eine abgebrochen gezeichnete perspektivische Schrägansicht eines Längenabschnittes des in Fig. 1 gezeigten Einfassungsteiles, wobei, wie bei Fig. 1, in der Fig. oben liegend das erste Ausführungsbeispiel und in der Figur unten liegend das zweite Ausführungsbeispiel verdeutlicht sind;
- Fig. 4 eine Seitenansicht des in Fig. 1 Gezeigten, wobei ein Teilbereich des zugeordneten Zylinderkopfes in abgebrochener Schnittdarstellung gezeigt ist, und
- Fig. 5 eine vergrößert gezeichnete Teildarstellung des in Fig. 4 mit V bezeichneten Teilbereiches.

Nachstehend ist die Erfindung am Beispiel einer Verschraubung für den Anschluss eines Abgaskrümmers am Zylinderkopf eines mehrzylindrigen Verbrennungsmotors erläutert. Es versteht sich, dass die Erfindung gleichermaßen bei Verschraubungen für den Anschluss andersartiger Rohrleitungen mit Vorteil einsetzbar ist, die von heißen Medien durchströmbar sind, die gasartig oder flüssig sein können.

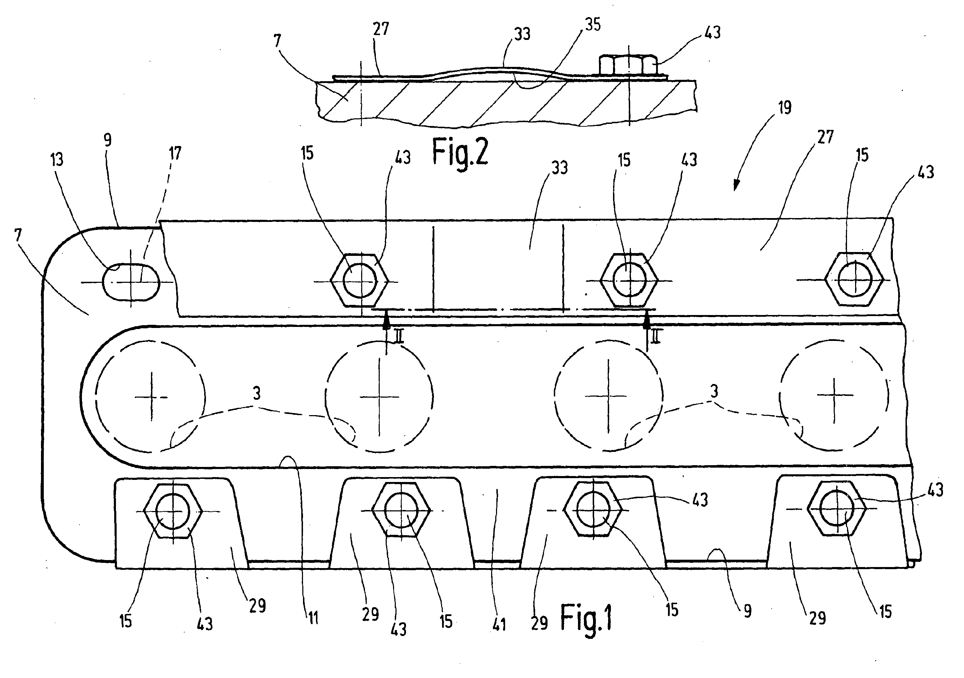

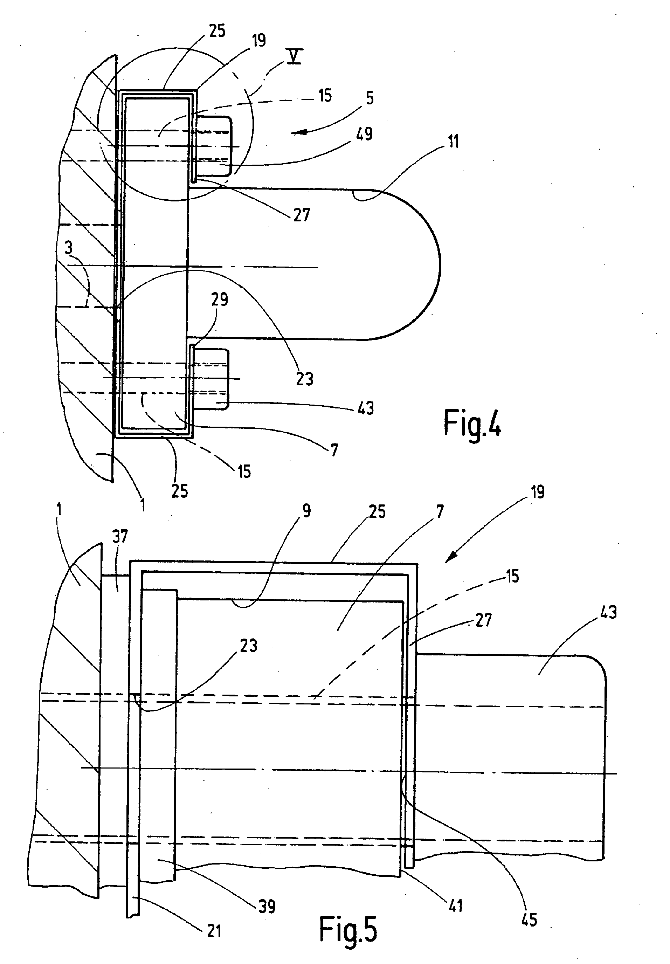

In der Zeichnung ist von einem mehrzylindrigem Verbrennungsmotor lediglich in Fig. 4 und 5 ein Zylinderkopf bereichsweise angedeutet und mit 1 bezeichnet. Am Zylinderkopf 1 befinden sich für die in Reihe angeordneten Zylinder in einer Längsrichtung zueinander versetzte Abgasausgänge 3, von denen in Fig. 1 vier Abgasausgänge 3 sichtbar sind. Der am Zylinderkopf 1 mittels der erfindungsgemäßen Verschraubung anzuschließende Abgaskrümmer, der in Fig. 4 als Ganzes mit 5 bezeichnet ist, weist, wie aus letztgenannter Fig. deutlich zu ersehen ist, einen Befestigungsflansch 7 üblicher Bauweise auf, der ein offenes Ende eines Abgassammelrohres 11 (Fig. 4) umgibt.

Entlang seiner langgestreckten Längsränder 9 verteilt weist der Flansch 7 eine Folge von Langlöchern 13 auf, die von Gewindebolzen durchgreifbar sind, bei denen es sich beim Ausführungsbeispiel um Stehbolzen 15 handelt, die im Zylinderkopf 1 verankert sind. Wie Fig. 1 zeigt, ist durch die Orientierung der Langlöcher 13 für eine Verschiebebewegung des Flansches 7 relativ zu den Stehbolzen 15 eine Verschieberichtung in Richtung einer Achse 17 (Fig. 1) vorgegeben, welche in der Längsrichtung der Längsränder 9 verläuft. Zur genauen Positionierung der zueinander verschiebbaren Komponenten in einer Ausgangslage, die zunächst thermisch unbelastet ist, kann ein entsprechendes Passloch mit eingreifbarem Paßzapfen vorgesehen sein.

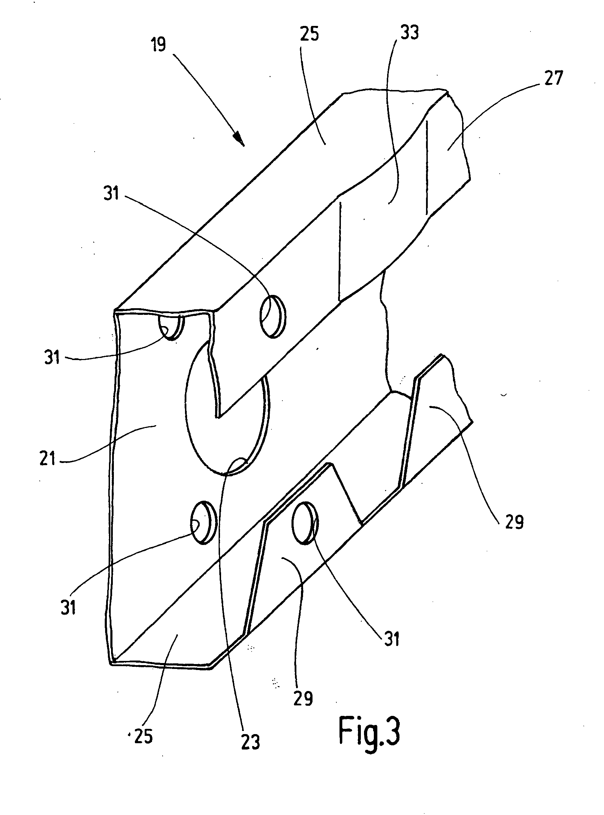

Von einem Einfassungsteil, das in Fig. 1, 3 und 5 als Ganzes mit 19 bezeichnet ist, ist in Fig. 3 ein Teillängenabschnitt gesondert dargestellt. Das Einfassungsteil 19 ist aus einem Stahlblech einstückig geformt und weist einen ebenen Boden 21 auf, in dem sich eine Folge von Durchgängen 23 (Fig. 3 und 4) befindet, die bei dem in Fig. 4 gezeigten Einbauzustand mit den Abgasausgängen 3 am Zylinderkopf 1 fluchten. Anstelle eines ebenen Bodens 21 kann bei einer nicht näher dargestellten Ausführungsform der Boden auch gesickt oder profiliert sein. Wie Fig. 3 ebenfalls deutlich zeigt, erstrecken sich an den längs verlaufenden Seitenrändern des Bodens 21 rechtwinklig aus dessen Ebene abgewinkelte Seitenwände 25, an die sich wiederum abgewinkelte Deckteile 27 anschließen. Entsprechend dem in der oberen Hälfte von Fig. 1 und 3 dargestellten Beispiel können die Deckteile 27 die Form durchgehender Deckleisten haben, während bei dem in Fig. 1 und 3 in der unteren Figurenhälfte dargestellten Ausführungsbeispiele die Deckteile in gesonderte Deckabschnitte 29 unterteilt sind, zwischen denen sich Lücken befinden. Im Boden 21 sowie in den Deckteilen 27 - bei dem letztgenannten Beispiel in den Deckabschnitten 29 - befinden sich Bohrungen 31 für die Stehbolzen 15, wobei zumindest ein Teil der im Einfassungsteil 19 vorgesehenen Bohrungen 31 im Durchmesser an den Durchmesser des betreffenden Stehbolzens 15 angepaßt ist, so dass das Einfassungsteil 19 relativ zu den Stehbolzen 15 nicht verschiebbar ist. Die genannten Deckteile können auch perforiert und/oder strukturiert sein.

Wie ebenfalls aus Fig. 3 und 4 am deutlichsten entnehmbar ist, hat das Einfassungsteil 19 eine derartige käfigartige Gestalt, dass es den Flansch 7 des Abgaskrümmers 5 an dessen dem Zylinderkopf 1 zugeordneter Seite mit seinem Boden 21 einfasst, dass die Seitenwände 25 die Längsränder 9 des Flansches 7 übergreifen und sich die Deckteile 27, gegebenenfalls in Form der Deckabschnitte 29, an der Oberseite 41 des Flansches 7 erstrecken. Bei dem Ausführungsbeispiel, bei dem im Abstand voneinander angeordnete, gesonderte Deckabschnitte 29 vorgesehen sind, ist der Wärmeübergang zwischen Krümmer 7 und Einfassungsteil 19 durch die Verkleinerung der Kontaktfläche reduziert. Bei dem in Fig. 1 und 3 oben liegend dargestellten Beispiel mit Deckteilen 27 in Form durchgehender Leisten ist eine entsprechende Verringerung der Wärmeübertragung dadurch erreichbar, dass in zwischen Bohrungen 31 gelegenen Abschnitten eine Verformung der Deckteile 27 in der Weise durchgeführt ist, dass Auswölbungen 33 gebildet sind, durch die sich jeweils Zwischenräume 35 (siehe Fig. 2) zwischen Deckteil 27 und Flansch 7 ergeben.

Wie aus Fig. 5 entnehmbar ist, in der Abmessungen der Dichtelemente der Dichtungsanordnung zur Verbesserung der Übersichtlichkeit übertrieben dimensioniert dargestellt sind, weist die zur Abdichtung zwischen Krümmer 5 und Zylinderkopf 1 vorgesehene Dichtungsanordnung ein am Zylinderkopf 1 anliegendes erstes Dichtelement 37 und ein am Flansch 7 anliegendes zweites Dichtelement 39 auf. Zwischen erstem und zweitem Dichtelement erstreckt sich der Boden 21 des Einfassungsteiles 19. Da, wie bereits ausgeführt, das Einfassungsteil 19 gegen thermisch bewirkte Verschiebebewegungen gesichert ist, ergeben sich an den Dichtflächen des ersten Dichtelementes 37 keine Relativbewegungen. Andererseits kann eine Verschiebebewegung des Flansches 7 durch Wärmeausdehnungen stattfinden, so dass eine Relativbewegung an den Dichtflächen des zweiten Dichtelementes 39 stattfinden kann, indem sich entweder der Flansch 7 relativ zum Dichtelement 39 oder sich das Dichtelement 39 zusammen mit dem Flansch 7 relativ zum Boden 21 des Einfassungsteiles 19 bewegt. Im Hinblick hierauf kann es vorteilhaft sein, am zweiten Dichtelement 39 und/oder am Boden 21 des Einfassungsteiles 19 und/oder an der anliegenden Fläche des Flansches 7 reibungsvermindernde Gestaltungen oder Werkstoffe wie Messing, Bronze, Bornitrit oder dergleichen zum Einsatz zu bringen. Ähnliche Maßnahmen können an der von den Deckteilen 27 oder Deckabschnitten 29 übergriffenen Oberseite 41 des Flansches 7 zweckmäßig sein. Bei einer nicht näher dargestellten Ausführungsform müßte das erste Dichtelement 37 nicht zwingend vorhanden sein und der Durchgang 23 könnte auch gesickt sein oder eine Umfassungssicke aufweisen.

Wie ersichtlich sind die Schraubenköpfe der Verschraubung durch auf den Stehbolzen sitzende Muttern 43 gebildet. Die angezogenen Muttern 43 drücken auf die Deckteile 27 oder gegebenenfalls die Deckabschnitte 29, also auf Anlageflächen am Einfassungsteil 19, das keine thermisch bedingten Verschiebebewegungen ausführt. Bei Verschiebungen des Flansches 7 ergibt sich daher keine durch Reibschluss bedingte Mitnahme der Muttern 43, wie dies der Fall wäre, wenn sich die Muttern 43 am Flansch 7 abstützen würden. Vielmehr erfolgt die Relativbewegung an der Oberseite 41 des Flansches in einer Verschiebezone 45 (Fig. 5) relativ zu dem betreffenden Deckteil 27/Deckabschnitt 29. Verschiebungen des Flansches 7 verursachen daher keinerlei Krafteinwirkung auf die Stehbolzen 15. Anstelle der Verwendung gesonderter Dichtelemente 37, 39 könnten am Boden 21 des Einfassungsteiles 19 Dichtsicken, die an der Innenseite und/oder Außenseite des Bodens 21 abdichtend wirken, ausgebildet sein. Wie sich in praktischen Versuchen gezeigt hat, kann sinnvollerweise bei der Erfindung die Verschraubung mit relativ kleinen Anzugsmomenten realisiert werden. Bei einer alternativ nicht näher dargestellten Ausführungsform können auch unmittelbar Kopfschrauben eingesetzt werden, bei denen der jeweilige Kopf mit dem Schraubenbolzen verbunden ist. Auch wenn eine geringfügige Ausdehnung zwischen den Komponenten Einfassungsteil 19, Durchgänge 23, Seitenwände 25 und Deckteile 27 vorhanden sein sollte, tangiert dies die Wirksamkeit der erfindungsgemäßen Ausgleichseinrichtung nicht. Auch braucht nicht jede herzustellende Verbindung mit einem Langloch 13 versehen zu sein.

## Patentansprüche

1. Einrichtung zur Bildung einer abgedichteten Verschraubung für den Anschluß einer Rohrleitung (5) an einen Ausgang (3) für ein die Einrichtung thermisch belastendes Strömungsmedium, insbesondere für den Anschluß eines Abgaskrümmers (5) an einen Abgasausgang (3) eines Verbrennungsmotors, mit in einem Befestigungsflansch (7) der Rohrleitung (5) vorgesehenen Bohrungen (13) für betreffende Gewindebolzen (15) und einer zwischen Flansch (7) und Ausgang (3) befindlichen Dichtungsanordnung (37, 39), wobei ein Einfassungsteil (19) vorgesehen ist, das den Flansch (7) an seiner dem Ausgang (3) zugewandten Seite unter Freilassung zumindest eines Durchganges (23) für das Medium einfaßt und eine zumindest teilweise Einfassung der von den Gewindebolzen (15) durchgriffenen weiteren Randbereiche (41) des Flansches (7) bildet, wobei im Einfassungsteil (19) zumindest eine Bohrung (31) einen dem ihr zugeordneten Gewindebolzen (15) angepaßten Durchmesser aufweist und die im Flansch (7) befindlichen Bohrungen als Langlöcher (13) ausgebildet sind, die eine Bewegung der Rohrleitung (5) in einer Verschieberichtung (17) quer zu den Gewindebolzen (15) ermöglichen, wobei sich zu beiden Seiten des dem Ausgang (3) zugewandten Teils (21) des Einfassungsteiles (19) ein Dichtelement (37, 39) der Dichtungsanordnung befindet, wobei der Flansch (7) an beiden Längsrändern (9), die sich entlang der durch die Langlöcher (13) vorgegebenen Verschieberichtung (17) erstrecken, eine Folge von Langlöchern (13) aufweist, und wobei das Einfassungsteil (19) an seiner dem Ausgang (3) zugewandten Seite einen von Längsrand (9) zu Längsrand (9) des Flansches (7) durchgehenden Boden (21) bildet, der mit Durchgängen (23) für das Medium und mit an den Durchmesser der Gewindebolzen (15) angepassten Bohrungen (31) versehen ist, **dadurch gekennzeichnet, dass** das Einfassungsteil (19) einstückig mit vom Boden (21) abgewinkelten Seitenwänden (25), die sich entlang der Längsränder (9) des Flansches (7) erstrecken, sowie mit Deckteilen (27, 29) gestaltet ist, die sich im Bereich der Längsränder (9) des Flansches (7) an dessen vom Ausgang (3) abgewandter Oberseite (41) erstrecken.

2. Einrichtung nach Anspruch 1, **dadurch gekennzeichnet, dass** sich die eine Folge von Bohrungen (31) für die Gewindebolzen (15) enthaltenden Deckteile (27) über die gesamte Länge des Einfassungsteiles (19) erstrecken.

3. Einrichtung nach Anspruch 2, **dadurch gekennzeichnet, dass** die Deckteile (27) in Bereichen, die zwischen aufeinanderfolgenden Bohrungen (31) gelegen sind, mit Abstandsflächen und/oder Auswölbungen (33) versehen sind, die jeweils einen Zwischenraum (35) zwischen Oberseite (41) des Flansches (7) und Deckteil (27) bilden.

4. Einrichtung nach Anspruch 2, **dadurch gekennzeichnet, dass** die Deckteile in gesonderte, durch Zwischenräume getrennte Deckabschnitte (29) unterteilt sind und dass die Bohrungen (31) für die Gewindebolzen (15) in Deckabschnitten (29) vorgesehen sind.

5. Einrichtung nach einem der vorhergehenden Ansprüche, **dadurch gekennzeichnet, dass** das zwischen Boden (21) des Einfassungsteiles (19) und zugewandter Fläche des Flansches (7) vorgesehene Dichtelement (39) reibungsreduzierend gestaltet und/oder mit reibungsreduzierenden Mitteln versehen ist.

6. Einrichtung nach einem der vorhergehenden Ansprüche, **dadurch gekennzeichnet, dass** zwischen Oberseite (41) des Flansches (7) und den Deckteilen (27, 29) des Einfassungsteiles (19) reibungsreduzierende Gestaltungen und/oder reibungsreduzierende Mittel vorhanden sind.

7. Einrichtung nach einem der vorhergehenden Ansprüche, **dadurch gekennzeichnet, dass** der Flansch (7) Teil eines Abgaskrümmers (5) ist, der zur Bildung eines gemeinsamen Anschlusses für mehrere in einer Längsrichtung verteilte Abgasausgänge (3) langgestreckte, die Langlöcher (13) enthaltende Längsränder (9) und diese endseits verbindende kürzere Seitenränder aufweist, und dass sich das Einfassungsteil (19) über die gesamte Folge der Langlöcher (13) des Flansches (7) erstreckt.

8. Einrichtung nach einem der vorhergehenden Ansprüche, **dadurch gekennzeichnet, dass** die durch die Langlöcher (13) vorgegebene Verschieberichtung (17) entlang der Längsränder (9) des Flansches (7) verläuft.

## Claims

1. Device for forming a sealed screw connection for the connection of a pipe (5) to an outlet (3) for a flow medium thermally loading the device, in particular for the connection of an exhaust manifold (5) to an exhaust outlet (3) of an internal combustion engine, with bores (13) for relevant threaded bolts (15) provided in a securing flange (7) of the pipe (5) and a sealing arrangement (37, 39) located between flange (7) and outlet (3), wherein an enclosing part (19) is provided, said part enclosing the flange (7) on its side facing the outlet (3), leaving at least one passage (23) free for the medium, and forming an at least partial enclosure of the additional edge areas (41) of the flange (7) penetrated by the threaded bolts (15), wherein in the enclosing part (19) at least one bore (31) has a diameter adapted to the threaded bolt (15) associated with it and the bores located in the flange (7) are designed as elongated holes (13) enabling movement of the pipe (5) in a direction of displacement (17) transverse to the threaded bolts (15), wherein a sealing element (37, 39) of the sealing arrangement is located on both sides of the part (21) of the enclosing part (19) facing the outlet (3), wherein the flange (7) has a series of elongated holes (13) at both longitudinal edges (9) extending along the direction of displacement (17) predetermined by the elongated holes (13) and wherein on its side facing the outlet (3) the enclosing part (19) forms a base (21) continuous from longitudinal edge (9) to longitudinal edge (9) of the flange (7), said base being provided with passages (23) for the medium and bores (31) adapted to the diameter of the threaded bolts (15), **characterized in that** the enclosing part (19) is configured in one piece with side walls (25) extending at an angle from the base (21) and along the longitudinal edges (9) of the flange (7) as well as with cover parts (27, 29) extending in the region of the longitudinal edges (9) of the flange (7) on the upper side (41) thereof facing away from the outlet (3).

2. Device as defined in claim 1, **characterized in that** the cover parts (27) containing a series of bores (31) for the threaded bolts (15) extend over the entire length of the enclosing part (19).

3. Device according to claim 2, **characterized in that** the cover parts (27) are provided with spacer surfaces and/or bulges (33) each forming an intermediate space (35) between upper side (41) of the flange (7) and cover part (27) in regions located between consecutive bores (31).

4. Device as defined in claim 2, **characterized in that** the cover parts are subdivided into separate cover sections (29) separated by intermediate spaces and that the bores (31) for the threaded bolts (15) are provided in cover sections (29).

5. Device as defined in any one of the preceding claims, **characterized in that** the sealing element (39) provided between base (21) of the enclosing part (19) and facing surface of the flange (7) is designed to be friction-reducing and/or is provided with friction-reducing means.

6. Device as defined in any one of the preceding claims, **characterized in that** friction-reducing configurations and/or friction-reducing means are present between upper side (41) of the flange (7) and the cover parts (27, 29) of the enclosing part (19).

7. Device as defined in any one of the preceding claims, **characterized in that** the flange (7) is part of an exhaust manifold (5) having elongated longitudinal edges (9) containing the elongated holes (13) and shorter side edges connecting them at the ends for the purpose of forming a common connection for several exhaust outlets (3) distributed in a longitudinal direction and that the enclosing part (19) extends over the entire sequence of elongated holes (13) of the flange (7).

8. Device as defined in any one of the preceding claims, **characterized in that** the direction of displacement (17) predetermined by the elongated holes (13) extends along the longitudinal edges (9) of the flange (7).

## Revendications

1. Dispositif servant à former un assemblage vissé étanche pour le raccordement d'une conduite tubulaire (5) à une sortie (3) pour un milieu en écoulement exerçant une sollicitation thermique sur ledit dispositif, en particulier pour le raccordement d'un collecteur de gaz d'échappement (5) à une sortie de gaz d'échappement (3) d'un moteur à combustion interne, comprenant des alésages (13) prévus dans une bride de fixation (7) de la conduite tubulaire (5) et destinés à des boulons filetés (15) concernés et comprenant un système d'étanchéité (37, 39) se trouvant entre la bride (7) et la sortie (3), un élément de bordure (19) étant prévu, lequel entoure la bride (7) au niveau de son côté tourné vers la sortie (3) en laissant libre au moins un passage (23) pour le milieu et qui forme une bordure au moins partielle des autres zones de bord (41) de la bride (7) traversées par les boulons filetés (15), au moins un alésage (31) présentant dans l'élément de bordure (19) un diamètre adapté au boulon fileté (15) qui lui est associé, et les alésages se trouvant dans la bride (7) étant réalisés sous la forme de trous oblongs (13), qui permettent un déplacement de la conduite tubulaire (5) dans une direction de déplacement par coulissement (17) de manière transversale par rapport aux boulons filetés (15), un joint d'étanchéité (37, 39) du système d'étanchéité se trouvant de part et d'autre de la partie (21) de l'élément de bordure (19), tournée vers la sortie (3), la bride (7) présentant une série de trous oblongs (13) au niveau des deux bords longitudinaux (9), qui s'étendent le long de la direction de déplacement par coulissement (17) prédéfinie par les trous oblongs (13), et l'élément de bordure (19) formant au niveau de son côté tourné vers la sortie (3) un fond (21) traversant la bride (7) de part en part d'un bord longitudinal (9) à un autre bord longitudinal (9) de cette dernière, lequel fond est pourvu de passages (23) pour le milieu et d'alésages (31) adaptés au diamètre des boulons filetés (15), **caractérisé en ce que** l'élément de bordure (19) est réalisé d'un seul tenant avec des parois latérales (25) coudées par rapport au fond (21), lesquelles s'étendent le long des bords longitudinaux (9) de la bride (7), ainsi que de parties de recouvrement (27, 29), qui s'étendent dans la zone des bords longitudinaux (9) de la bride (7) au niveau du côté supérieur (41) de cette dernière opposé à la sortie (3).

2. Dispositif selon la revendication 1, **caractérisé en ce que** les parties de recouvrement (27) contenant une série d'alésages (31) pour les boulons filetés (15) s'étendent sur toute la longueur de l'élément de bordure (19).

3. Dispositif selon la revendication 2, **caractérisé en ce que** les parties de recouvrement (27) sont pourvues, à des endroits situés entre les alésages (31) se suivant, de surfaces d'écartement et/ou de bombements (33), qui forment respectivement un espace intermédiaire (35) entre le côté supérieur (41) de la bride (7) et la partie de recouvrement (27).

4. Dispositif selon la revendication 2, **caractérisé en ce que** les parties de recouvrement sont divisées en des sections de recouvrement (29) individuelles séparées par des espaces intermédiaires, et **en ce que** les alésages (31) sont prévus pour les boulons filetés (15) dans des sections de recouvrement (29).

5. Dispositif selon l'une quelconque des revendications précédentes, **caractérisé en ce que** le joint d'étanchéité (39) prévu entre le fond (21) de l'élément de bordure (19) et la surface associée de la bride (7) est réalisé de manière à réduire le frottement et/ou est pourvu de moyens de réduction du frottement.

6. Dispositif selon l'une quelconque des revendications précédentes, **caractérisé en ce que** des configurations réduisant le frottement et/ou des moyens de réduction du frottement sont présents entre le côté supérieur (41) de la bride (7) et les parties de recouvrement (27, 29) de l'élément de bordure (19).

7. Dispositif selon l'une quelconque des revendications précédentes, **caractérisé en ce que** la bride (7) fait partie intégrante d'un collecteur de gaz d'échappement (5), qui présente aux fins de la formation d'un raccordement commun pour plusieurs sorties de gaz d'échappement (3) réparties dans une direction longitudinale, des bords plus courts de forme allongée reliant les bords latéraux (9) contenant des trous oblongs (13) et lesdites sorties du côté des extrémités, et **en ce que** l'élément de bordure (19) s'étend sur toute la série des trous oblongs (13) de la bride (7).

8. Dispositif selon l'une quelconque des revendications précédentes, **caractérisé en ce que** la direction de déplacement par coulissement (17) prédéfinie par les trous oblongs (13) s'étend le long des bords longitudinaux (9) de la bride (7).
